# EUROPEAN PATENT APPLICATION

(11) **EP 4 534 212 A1**
(43) Date of publication of application: **09.04.2025**
(21) Application number: 23811660.2
(22) Date of filing: 12.05.2023
(51) Int. Cl.: B05D 1/36, B05D 1/40, B05D 7/24, B32B 5/26

(54) **METHOD FOR PRODUCING LAMINATE**

(30) Priority: 24.05.2022 JP 2022084552
(71) Applicant: Nikon-Essilor Co., Ltd., Tokyo 130-0026 (JP)
(72) Inventor: PROVIN, Christophe, Tokyo 130-0026 (JP)
(74) Representative: Viering, Jentschura & Partner mbB Patent- und Rechtsanwälte
(86) International application number: PCT/JP2023/017962
(87) International publication number: WO 2023/228786

(57) **Abstract**

An object of the present invention is to provide a method of producing a laminate that exhibits a low resistance value and excellent light transmittance. The method of producing a laminate according to the present invention includes: a first step of rotating the base and spin-coating a composition including metal nanowires and a solvent on a surface of the base; and a second step of rotating the base obtained in the first step and spin-coating, on the surface of the base on which surface the composition has been spin-coated in the first step, a composition including metal nanowires and a solvent, wherein a position of a rotation center of the base in the first step is different from a position of a rotation center of the base in the second step. Further, the laminate obtained includes a base and a metal nanowire layer.

## Description

### TECHNICAL FIELD

The present disclosure relates to a method of producing a laminate.

### BACKGROUND ART

Patent Literature 1 discloses a metal nanowire-containing transparent conductive film and discloses applying a metal nanowire-containing coating liquid to a base to form the metal nanowire-containing transparent conductive film.

### CITATION LIST

### PATENT LITERATURE

Patent Literature 1: JP 2012-216535 A

### SUMMARY OF INVENTION

The present disclosure relates to a method of producing a laminate including a base and a metal nanowire layer, the method comprising: a first step of rotating the base and spin-coating a composition including metal nanowires and a solvent on a surface of the base; and a second step of rotating the base obtained in the first step and spin-coating, on the surface of the base on which surface the composition has been spin-coated in the first step, a composition including metal nanowires and a solvent, wherein a position of a rotation center of the base in the first step is different from a position of a rotation center of the base in the second step.

### BRIEF DESCRIPTION OF DRAWINGS

[FIG. 1] FIG. 1 is a view for describing an example of an embodiment of a method of producing a laminate.
[FIG. 2] FIG. 2 is a view for describing a base having undergone a first step.
[FIG. 3] FIG. 3 is a view for describing the base having undergone a second step.
[FIG. 4] FIG. 4 is a view for describing a measurement method of a resistance value of a laminate in each of examples and comparative examples.

### DESCRIPTION OF EMBODOIMENT

Below, described in detail is a method of producing a laminate according to the present embodiment.

It is desirable for a laminate including a base and a metal nanowire layer to exhibit a low resistance value and excellent light transmittance. The method of producing a laminate according to the present embodiment makes it possible to produce a laminate having the foregoing characteristics.

Note that, in the description, numerical values given before and after "to" are included in a range as the lower and upper limits thereof.

The method of producing a laminate according to the present embodiment includes the following first step and second step.

First step: a step of rotating a base and spin-coating a composition including metal nanowires and a solvent (hereinafter, also simply referred to as "composition") on a surface of the base

Second step: a step of rotating the base obtained in the first step and spin-coating, on the surface of the base on which surface the composition has been spin-coated in the first step, a composition including metal nanowires and a solvent

Below, the procedure of each step is described with reference to the drawings.

### <First Step>

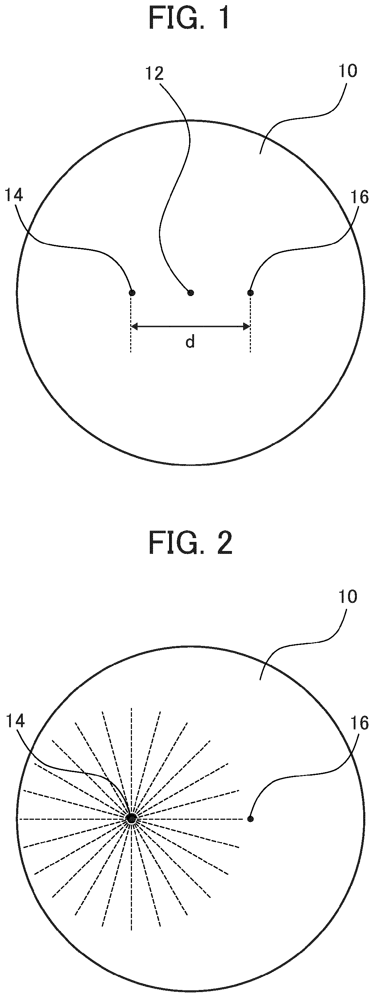

The first step is a step of rotating the base and spin-coating the composition on the surface of the base. FIG. 1 is a plan view of a base 10 used in the first step. As shown in FIG. 1, the base 10 has a perfect circle shape, and a center of gravity 12 of the base 10 is located at the center thereof.

In the first step, after the above-described composition is supplied on the surface of the base 10, the base 10 is rotated about a first rotation center 14 (a rotation center of the base in the first step) as the center of the rotation. When such a process is performed, as shown by the broken line in FIG. 2, the metal nanowires are easily distributed radially around the position of the first rotation center 14.

Below, the members and materials used in the present step as well as the procedure thereof are described in detail.

### (Base)

The base is a member used for performing the above-described spin-coating. When a laminate to be described later is formed, the base serves as a member that supports the metal nanowire layer.

The base is preferably a spectacle lens base.

The spectacle lens base is not particularly limited in type, and normal spectacle lens bases made of, for instance, plastic or inorganic glass are usable. A plastic spectacle lens base is preferred because of excellent handleability.

The plastic spectacle lens base is not particularly limited in type, and examples thereof include a finished lens that is obtained through optical finishing of both the convex and concave surfaces and shaping according to a desired power, a semi-finished lens whose convex surface is solely finished as an optical surface (e.g., a spherical surface, a rotationally symmetric aspheric surface, a progressive surface), and a lens obtained by processing and polishing the concave surface of a semi-finished lens according to the prescription of the wearer.

Plastic (so-called resin) constituting the plastic spectacle lens base is not particularly limited in type, and examples thereof include (meth)acrylic resin, thiourethane resin, allyl resin, episulfide resin, polycarbonate resin, polyurethane resin, polyester resin, polystyrene resin, polyethersulfone resin, poly-4-methylpentene-1 resin, and diethylene glycol bis(allyl carbonate) resin (CR-39).

The thickness of the plastic spectacle lens base is not particularly limited and, in most cases, is about 1 to about 30 mm for the sake of handleability.

The refractive index of the plastic spectacle lens base is not particularly limited.

The plastic spectacle lens base need not be transparent as long as it is translucent, and may contain a UV absorber or a colorant that absorbs light in a specific wavelength region from the ultraviolet region through the infrared region.

The planar shape of the base (the shape of the base when observed from the normal direction of the surface of the base) is not particularly limited, and may be a perfect circle shape as shown in FIG. 1 described above, or may be another shape than the perfect circle shape.

### (Composition)

The composition includes metal nanowires and a solvent.

Metal contained in the metal nanowires included in the composition is preferably at least one selected from the group consisting of silver, gold, copper, nickel, and platinum, with silver or gold being more preferred, and silver being still more preferred, because the resistance value of the laminate becomes lower (in other words, because the resistance value of the metal nanowire layer becomes lower) (hereinafter, also simply described as "because the resistance value becomes lower").

Note that the metal nanowire refers to a conductive material that is metal, has a needle shape or a filamentous shape, and has a nanometer-size diameter. The metal nanowire may be linear or curved.

The diameter of the metal nanowire is not particularly limited and is preferably not more than 500 nm, more preferably not more than 200 nm, still more preferably not more than 100 nm, and particularly preferably not more than 40 nm because the light transmittance of the metal nanowire layer becomes more excellent. The lower limit thereof is often not less than 10 nm.

The foregoing diameter of the metal nanowire is the average that is determined by observing cross sections of metal nanowires with a scanning electron microscope or a transmission electron microscope to measure the diameters of the metal nanowires at twenty places and calculating the arithmetic mean of the measurements. When the cross section is not in a perfect circle shape, the major axis length is regarded as the diameter.

The length of the metal nanowire is not particularly limited and is preferably 5 to 1000 µm, more preferably 10 to 500 µm and even more preferably 20 to 300 µm because the resistance value becomes lower.

The foregoing length of the metal nanowire is the average that is determined by measuring the lengths of twenty metal nanowires with a scanning electron microscope or a transmission electron microscope and calculating the arithmetic mean of the measurements.

The ratio of the length L of the metal nanowire to the diameter d thereof (aspect ratio: L/d) is not particularly limited and is preferably 10 to 100,000 and more preferably 50 to 100,000.

The measurement methods of the diameter and length of the metal nanowire are as described above.

The solvent included in the composition may be water or an organic solvent.

The organic solvent is not particularly limited in type, and examples thereof include an alcoholic solvent, a ketone solvent, an ether solvent, an ester solvent, a hydrocarbon solvent, a halogenated hydrocarbon solvent, an amide solvent, a sulfone solvent and a sulfoxide solvent.

Among them, an alcoholic solvent is preferable, and isopropyl alcohol (IPA) is more preferable.

The metal nanowire content of the composition is not particularly limited and is preferably not less than 98 mass% and more preferably not less than 99 mass% based on the total solids of the composition.

The "solids" above refer to components other than the solvent in the composition, and even if the components are in a liquid form, they are considered as solids.

The metal nanowire content of the composition is preferably 0.1 to 10.0 g/L and more preferably 0.3 to 6.0 g/L based on the total volume of the composition.

### (Procedure of First Step)

The procedure of the first step is not particularly limited as long as the composition can be spin-coated on the surface of the base, and examples thereof include a method in which the composition is supplied on the surface of the base, followed by rotating the base, by using a known spin coater.

The method of supplying the composition on the surface of the base is not particularly limited, and exemplary methods include a known method. One example is a method involving discharging the composition to a predetermined position of the base using a discharging nozzle. Note that the position to which the composition is discharged is preferably the position of the rotation center of the base in the first step.

In addition, the composition may be supplied all at once or dividedly at a plurality of times. When the supply of the composition is performed a plurality of times, the base may be rotated each time the composition is supplied, or the base may be rotated after the supply of the composition is performed a plurality of times.

The amount of the composition to be supplied can be appropriately changed depending on the size and type of the base to be used as well as the composition. The amount of the composition to be supplied is preferably 0.1 to 10 mL and more preferably 0.5 to 5 mL.

The method of rotating the base is not particularly limited, and examples thereof include a method using a known spin coater.

As one example of the method using a spin coater, the base can be rotated by rotating a rotary table in the spin coater with the base being held on the rotary table.

Examples of the mechanism for holding the base on the rotary table include a vacuum suction mechanism for fixing the base to the rotary table by reducing a pressure with a vacuum pump, and a mechanical mechanism for mechanically fixing the base to the rotary table.

The rotational speed of the base when spin-coating is performed is not particularly limited and may be, for example, 300 to 3000 rpm (rotation per minute) and is preferably 500 to 2000 rpm.

After the composition is spin-coated, drying treatment for removing a solvent or the like contained in the composition may be performed. One method of performing the drying treatment is heating treatment. The heating temperature in heating treatment is not particularly limited and is preferably 70°C to 150°C and more preferably 90°C to 130°C. The heating time is preferably from 0.5 to 90 minutes and more preferably from 1 to 60 minutes.

### <Second Step>

The second step is a step of rotating the base obtained in the first step and spin-coating, on the surface of the base on which surface the composition has been spin-coated in the first step, a composition including metal nanowires and a solvent. By performing this step, the metal nanowire layer is formed on the base.

In the second step, after the composition is supplied on the surface of the base obtained in the first step on which surface the composition has been spin-coated, the base 10 is rotated about a second rotation center 16 (the rotation center of the base in the second step) as the center of the rotation. The position of the first rotation center 14 and the position of the second rotation center 16 are different from each other.

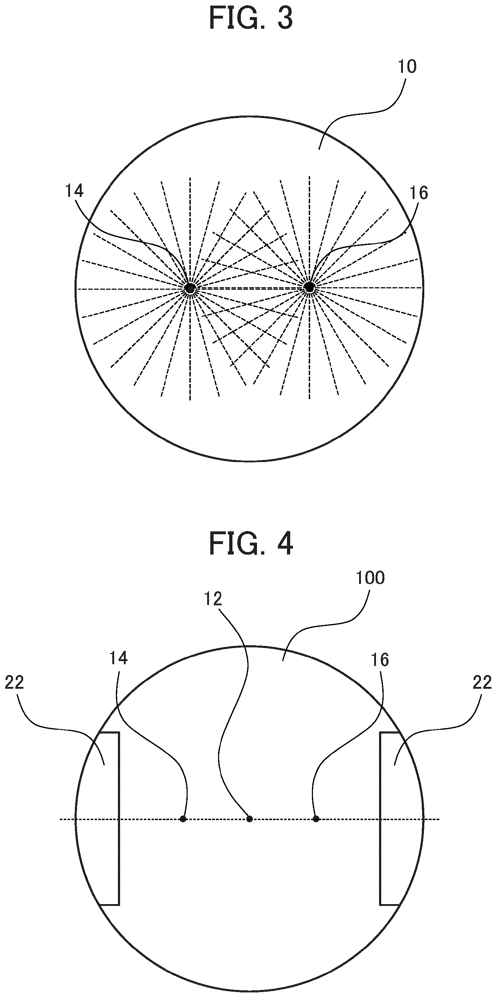

When such a process is performed, as shown by the broken line in FIG. 3, the metal nanowires are easily distributed radially around the position of the second rotation center 16. As a result, as shown in FIG. 3, between the first rotation center 14 and the second rotation center 16, there are many points where the metal nanowires radially disposed about the first rotation center 14 and the metal nanowires radially disposed about the second rotation center 16 intersect one another. When the number of points where the metal nanowires intersect one another increases as described above, the resistance value in an in-plane direction can be decreased without decrease in light transmittance.

The materials used in this step and the procedure thereof are described in detail below.

The definition and preferred embodiment of the composition used in the second step are the same as the definition and preferred embodiment of the composition used in the first step.

It suffices if the composition used in the first step and the composition used in the second step each include metal nanowires and a solvent, and these compositions may be the same or different from each other. Compositions having different concentrations of the metal nanowires or using different types of the metal nanowires fall in a case of different types of compositions.

### (Procedure of Second Step)

The procedure of the second step is not particularly limited as long as the composition can be spin-coated on the surface of the base, and examples thereof include a method in which the composition is supplied on the surface of the base, followed by rotating the base.

The procedure of the second step may be the procedure described in the first step.

The relationship between the position of the rotation center of the base in the first step and the position of the rotation center of the base in the second step is not particularly limited as long as they are different from each other.

More specifically, as shown in FIG. 1, it suffices if a distance d between the first rotation center 14 and the second rotation center 16 is greater than 0 mm. The above-described distance d is preferably not less than 3 mm and more preferably not less than 5 mm because the resistance value becomes lower. On the other hand, the above-described distance d is not particularly limited and is preferably not more than 30 mm and more preferably not more than 20 mm.

In the embodiment shown in FIG. 1, the first rotation center 14 and the second rotation center 16 are arranged so as to be substantially point-symmetric with respect to the center of gravity 12 of the base, but the method of producing a laminate according to the present embodiment is not limited to the above-described embodiment.

For example, the position of the first rotation center 14 may coincide with the position of the center of gravity 12 of the base, and the position of the second rotation center 16 may coincide with the position of the center of gravity 12 of the base. In addition, the center of gravity 12 of the base may not be located on a line segment connecting the first rotation center 14 and the second rotation center 16.

### <Other Steps>

The method of producing a laminate according to the present embodiment may include steps (other steps) other than the first step and the second step. Below, the other steps are described.

### (Base Cleaning Step)

The method of producing a laminate according to the present embodiment may include a base cleaning step of cleaning the surface of the base before the first step.

The base cleaning step is not particularly limited as long as the surface of the base can be cleaned.

Specific examples of the base cleaning step include a method in which gas is supplied to the surface of the base, a method in which a cleaning liquid is supplied on the surface of the base, and a method in which a cleaning brush or the like (including, for example, a cloth, a porous body, and paper) containing a cleaning liquid is brought into contact with the surface of the base. Two or more of the above-described methods may be combined to perform the base cleaning step.

### (Moisture Supply Step)

In addition, after the composition is spin-coated in the first step and the second step, the method of producing a laminate according to the present embodiment may include a moisture supply step of supplying moisture to the base on which the composition has been spin-coated and drying the base because the resistance value becomes lower. By performing the above-described step, the metal nanowires are well bonded to each other by capillary force.

A specific method of the moisture supply step may be a method in which water vapor is supplied to the metal nanowire layer until microdroplets (fogging) are generated and the metal nanowire layer is dried until the microdroplets disappear.

The moisture supply step may be repeated, and the number of repetitions is preferably 2 to 20 and more preferably 3 to 10.

The moisture supply step is preferably performed after each of the first step and the second step.

For the above-described moisture supply step, Nano Lett. 2017, 17, 2, 1090-1096 of Y.Liu et al. can also be referred to.

### (Third Step)

The method of producing a laminate according to the present embodiment may further include, after the second step, a third step of rotating the base obtained in the second step and spin-coating a composition including a metal nanowire and a solvent on the surface of the base on which surface the composition has been spin-coated in the second step.

In other words, the method of producing a laminate according to the present embodiment may include a step of spin-coating a composition on the base in addition to the first step and the second step. The position of the rotation center of the base in the third step may coincide with or be different from the position of the rotation center of the base in the first step. In addition, the position of the rotation center of the base in the third step may coincide with or be different from the position of the rotation center of the base in the second step.

In particular, the position of the rotation center of the base in the third step is preferably different from both the position of the rotation center of the base in the first step and the position of the rotation center of the base in the second step.

In addition, the third step may be performed only once or a plurality of times. In a case where the third step is performed a plurality of times, the positions of the rotation center of the base in the third step may be the same or be different among a plurality of times.

### <Laminate>

The laminate that can be produced by the above-described method of producing a laminate is a laminate including a base and a metal nanowire layer.

The structure of the laminate to be produced is described in detail below.

Note that since the base included in the laminate is the same as the base described above, the description thereof will be omitted.

### (Metal Nanowire Layer)

The metal nanowire layer is a layer formed by performing the first step and the second step. The metal nanowire layer has conductivity and can impart antistatic properties to the base.

The metal nanowire layer is a layer constituted of metal nanowires. In other words, the metal nanowire layer is an aggregate of a plurality of metal nanowires (a layered aggregate of metal nanowires) in which the metal nanowires are aggregated to form a layer.

The metal nanowire layer may be disposed to entirely cover one main surface of the base or partially cover the same. In other words, it is only essential that the metal nanowire layer be disposed to cover at least part of the surface (particularly, one of the two main surfaces) of the base.

The coverage of the metal nanowire layer in relation to the surface of the base is not particularly limited and is typically not less than 5.0%, and is preferably not less than 20.0%, more preferably not less than 25.0% and even more preferably not less than 40.0% because the predetermined effect becomes more excellent. The upper limit thereof is not particularly limited and may be 100%, and is preferably not more than 85.0%, more preferably not more than 75.0%, and even more preferably not more than 65.0% because this brings about more excellent transparency of the laminate.

The coverage of the metal nanowire layer is determined as follows:
First, a laminate is observed with an optical microscope at a magnification of 500X; three arbitrary regions are selected; proportion (%) of the area where metal nanowires are present in relation to the entire area in each region (length: 500 µm, width: 660 µm) is determined; and the arithmetic mean of the proportions is calculated.

The average thickness of the metal nanowire layer is not particularly limited and is preferably 1 to 300 nm and more preferably 10 to 100 nm because the predetermined effect becomes more excellent.

The average thickness of the metal nanowire layer is determined as follows:
First, a spectral reflection characteristic of a laminate are measured using an optical measurement device (USPM-RU III reflectometer manufactured by Olympus Corporation), and curve fitting is carried out to determine the thickness.

The laminate may include other members than the base and the metal nanowire layer.

The laminate may include a hard coat layer on the metal nanowire.

The hard coat layer is a layer imparting scratch resistance to the base. The hard coat layer is disposed to cover the metal nanowire layer described above and thereby protect the metal nanowire layer from the outside.

The hard coat layer preferably has, in terms of pencil hardness, the hardness "H" or higher hardness determined by the test method according to JIS K 5600.

For the hard coat layer, known hard coat layers are usable, and examples thereof include organic hard coat layers, inorganic hard coat layers, and organic-inorganic hybrid hard coat layers. In the technical field of spectacle lens, for example, organic-inorganic hybrid hard coat layers are typically employed.

The method of forming a hard coat layer is not particularly limited, and examples thereof include a method involving applying the hard coat layer-forming composition onto the metal nanowire layer to form a coating and subjecting the coating to curing treatment such as light irradiation treatment.

In addition, the above-described laminate may include a primer layer between the base and the metal nanowire layer. The primer layer serves to improve the adhesion of the metal nanowire layer, the hard coat layer, and other members to the base.

A material constituting the primer layer is not particularly limited, and any known materials are usable. For instance, resin is mainly used. The resin for use is not particularly limited in type, and examples thereof include polyurethane resin, epoxy resin, phenol resin, polyimide resin, polyester resin, bismaleimide resin, and polyolefin resin, with polyurethane resin being preferred.

The method of forming the primer layer is not particularly limited, and any known method may be employed. One exemplary method involves applying a primer layer-forming composition containing a predetermined resin onto the spectacle lens base, optionally followed by curing treatment, thereby forming the primer layer.

In addition, the laminate may include an antireflection film.

The antireflection film is not particularly limited in structure and may be of a single layer structure or a multilayer structure.

For the antireflection film, an inorganic antireflection film is preferred. The inorganic antireflection film is an antireflection film constituted of an inorganic compound.

In the case of multilayer structure, it is preferable to have the structure in which a low refractive index layer(s) and a high refractive index layer(s) are alternately stacked. Exemplary materials that may be used to form the high refractive index layer include oxides of titanium, zirconium, aluminum, niobium, tantalum and lanthanum. Exemplary materials that may be used to form the low refractive index layer include oxides such as silica.

The producing method of the antireflection film is not particularly limited, and examples thereof include dry methods such as vacuum evaporation, sputtering, ion plating, ion-beam assisted deposition and a chemical vapor deposition (CVD) method.

### <Application>

The above-described laminate can be applied to various applications. In particular, when a spectacle lens base is used as the base, the laminate can be used as a spectacle lens.

### [EXAMPLES]

The foregoing embodiment is described below in further detail by way of examples and comparative examples; however, the invention should not be construed as being limited to the following examples.

### <Comparative Example 1 and Examples 1 to 3>

### (First Step)

As a base, a plano-convex lens base (circular shape, diameter: 75 mm) having a refractive index of 1.60 was prepared. The opposite sides of the plano-convex lens base were untreated.

First, the convex surface of the plano-convex lens base was wiped with a nonwoven fabric impregnated with acetone to clean the surface. Next, the plano-convex lens base was set on a spin coater such that the flat-surface side of the plano-convex lens base was situated on the vacuum chuck side. At this time, in Comparative Example 1, the plano-convex lens base was set on the spin coater such that the position of the center of gravity of the plano-convex lens base and the position of the rotation center of the spin coater coincided with each other. On the other hand, in each of Examples 1 to 3, the plano-convex lens base was set on the spin coater such that the distance between the position of the center of gravity of the plano-convex lens base and the position of the rotation center of the spin coater had a value half of the distance between the rotation centers shown in the table to be described later. For example, in Example 1, the plano-convex lens base was set on the spin coater such that the distance between the position of the center of gravity of the plano-convex lens base and the position of the rotation center of the spin coater was 2.5 mm.

The position of the rotation center of the above-described spin coater coincides with the position of the rotation center of the base in the first step (the first rotation center 14 shown in FIG. 1).

A predetermined amount of isopropyl alcohol (IPA) was added to a silver nanowire dispersion liquid (EMJapan, NW-AG30-05G-IPA) to obtain a composition having the silver nanowire concentration of a 0.5 g/L, and 1 mL of the composition was dropped onto the convex-side surface of the plano-convex lens base set on the spin coater.

After the above-described composition was dropped, the plano-convex lens base was rotated at 1000 rpm for 60 seconds, and the composition was spin-coated (first step).

The silver nanowires had a diameter of 30 nm and a length of 30 µm.

After the spin-coating, the plano-convex lens base was removed from the vacuum chuck of the spin coater, and the following process (corresponding to the above-described moisture supply step) was performed.

First, exhaled air was blown to the convex-side surface of the plano-convex lens base for about 1 to 2 seconds, and fogging derived from moisture contained in the exhaled air was generated on the convex-side surface. The lens was then dried at room temperature for about 5 to 10 seconds until the fogging disappeared. The above-described process of blowing exhaled air and process of drying the lens were alternately repeated 5 times.

### (Second Step)

Next, the plano-convex lens base was set on the spin coater such that the flat-surface side of the plano-convex lens base obtained as above was situated on the vacuum chuck side. At this time, in Comparative Example 1, the plano-convex lens base was set on the spin coater such that the position of the center of gravity of the plano-convex lens base and the position of the rotation center of the spin coater coincided with each other. On the other hand, in each of Examples 1 to 3, the plano-convex lens base was set on the spin coater such that the distance between the position of the rotation center of the spin coater and the position of the rotation center of the base in the first step had the value of the distance between rotation centers shown in the table described later. Meanwhile, when viewed from the upper surface of the plano-convex lens base, the position of the rotation center of the base in the second step and the position of the rotation center of the base in the first step were located so as to sandwich the center of gravity of the plano-convex lens base (see FIG. 1). More specifically, in Example 1, the center of gravity of the plano-convex lens base is located at the center of a line segment connecting the position of the rotation center of the base in the first step and the position of the rotation center of the base in the second step. The rotation center of the spin coater coincides with the position of the rotation center of the base in the second step (second rotation center 16 shown in FIG. 1).

In the table, the distance between rotation centers being 0 mm represents that the position of the rotation center of the base in the first step coincides with the position of the rotation center of the base in the second step.

An amount of 1 mL of the composition used in the first step was dropped onto the convex-side surface (the surface on which the metal nanowire layer was formed) of the plano-convex lens base set on the spin coater.

After the composition was dropped, the plano-convex lens base was rotated at 1000 rpm for 60 seconds, and the composition was spin-coated to form a metal nanowire layer (silver nanowire layer) (second step).

After the metal nanowire layer is formed, the plano-convex lens base was removed from the vacuum chuck of the spin coater, and the moisture supply treatment was performed in the same manner as in the first step.

The laminates of Comparative Example 1 and Examples 1 to 3 were obtained by the above-described procedure.

### <Comparative Example 2 and Examples 4 to 6>

The laminates of Comparative Example 2 and Examples 4 to 6 were obtained according to the same procedure as that in Comparative Example 1 and Examples 1 to 3 except that the silver nanowire dispersion liquid used for the preparation of the above composition was replaced with a silver nanowire dispersion liquid (AgNW-L30) manufactured by ACS Materials and that the silver nanowire concentration in the composition was 5.0 g/L. The silver nanowires included in the composition used to prepare the laminates of Comparative Example 2 and Examples 4 to 6 had a diameter of 30 nm and a length of 150 µm.

### <Comparative Example 3 and Examples 7 to 9>

The laminates of Comparative Example 3 and Examples 7 to 9 were obtained according to the same procedure as that for the laminates of Comparative Example 2 and Examples 4 to 6 except that the silver nanowire concentration in the above-described composition was 0.5 g/L.

### <Evaluation>

With the laminates obtained in Examples and Comparative Example above, the evaluations below were conducted. The results are all shown in Table 1 below.

### (Resistance Value)

The resistance values of the laminates obtained in the examples and the comparative examples were each determined by attaching pieces of copper adhesive tape to the laminate thus produced and measuring the resistance value between the pieces of copper adhesive tape.

A method of measuring the resistance value of the laminate is described with reference to FIG. 4.

First, a piece of copper adhesive tape 22 was cut out to have a width of 1 cm and a length of 4 cm, and two pieces of cut-out copper adhesive tape 22 were attached to a surface of the laminate 100, on which surface the metal nanowire layer was disposed, such that the center in the length direction of each piece of cut-out copper adhesive tape 22 was situated on the straight line passing the first rotation center 14, the second rotation center 16, and the center of gravity 12 of the base and that an end in the width direction of each piece of cut-out copper adhesive tape 22 coincides with an end of a laminate 100. Of the pieces of copper adhesive tape 22, the positions that are not in contact with the laminate 100 were cut away by scissors in accordance with the shape of the end portion of the laminate 100, whereby a subject was obtained.

Alligator clips were separately connected to the pieces of copper adhesive tape of the sample, and a digital multimeter (CDM-16D, manufactured by CUSTOM kk) was connected to each alligator clip to measure the resistance value. The measured resistance value was taken as the resistance value of the laminate.

As the copper adhesive tape, conductive copper foil adhesive tape (NO.8323, manufactured by Teraoka Seisakusho Co., Ltd.) was used.

### (Transmittance)

The transmittance of the laminate at a wavelength of 550 nm was measured with U-4100 Hitachi spectrophotometer. The transmittance was measured at the center portion of the laminate.

In Table 1, the "AgNW type" column represents the type of silver nanowire included in the composition, "1" represents a silver nanowire having a diameter of 30 nm and a length of 30 µm, and "2" represents a silver nanowire having a diameter of 30 nm and a length of 150 µm.

In Table 1, the "distance between rotation centers" column represents the distance between the position of the rotation center (first rotation center) of the base in the first step and the position of the rotation center (second rotation center) of the base in the second step.

**[Table 1]**

| Table 1 | Metal nanowire layer forming conditions | | | Evaluation | |
|---|---|---|---|---|---|
| | AgNW type | Composition concentration [g/L] | Distance between rotation centers [mm] | Transmittance [%] | Resistance value [Ω] |
| Comparative Example 1 | 1 | 0.5 | 0 | 87.4 | 10000 |
| Example 1 | 1 | 0.5 | 5 | 87.5 | 900 |
| Example 2 | 1 | 0.5 | 10 | 87.8 | 600 |
| Example 3 | 1 | 0.5 | 15 | 87.6 | 1700 |
| Comparative Example 2 | 2 | 5.0 | 0 | 65.3 | 22 |
| Example 4 | 2 | 5.0 | 5 | 68.7 | 14 |
| Example 5 | 2 | 5.0 | 10 | 70.1 | 13 |
| Example 6 | 2 | 5.0 | 15 | 71.5 | 12 |
| Comparative Example 3 | 2 | 0.5 | 0 | 87.0 | 4700 |
| Example 7 | 2 | 0.5 | 5 | 87.5 | 4600 |
| Example 8 | 2 | 0.5 | 10 | 88.2 | 2100 |
| Example 9 | 2 | 0.5 | 15 | 88.3 | 3000 |

As shown in Table 1, it was confirmed that according to the production method of the present embodiment, a laminate exhibiting a low resistance value and excellent light transmittance could be obtained.

### DESCRIPTION OF SYMBOLS

- 10: base
- 12: center of gravity
- 14: first rotation center
- 16: second rotation center
- 100: laminate
- 22: copper adhesive tape

## Claims

1. A method of producing a laminate including a base and a metal nanowire layer, the method comprising:
a first step of rotating the base and spin-coating a composition including metal nanowires and a solvent on a surface of the base; and
a second step of rotating the base obtained in the first step and spin-coating, on the surface of the base on which surface the composition has been spin-coated in the first step, a composition including metal nanowires and a solvent,
wherein a position of a rotation center of the base in the first step is different from a position of a rotation center of the base in the second step.

2. The method of producing a laminate according to claim 1, wherein a distance between the position of the rotation center of the base in the first step and the position of the rotation center of the base in the second step is not less than 3 mm.

3. The method of producing the laminate according to claim 1 or 2, wherein a distance between the position of the rotation center of the base in the first step and the position of the rotation center of the base in the second step is not more than 20 mm.

4. The method of producing a laminate according to any one of claims 1 to 3, wherein a length of the metal nanowire is 20 to 300 µm.

5. A method of producing a laminate according to any one of claims 1 to 4, wherein a content of the metal nanowires in the composition is 0.3 to 6.0 g/L with respect to a total volume of the composition.
